# EUROPEAN PATENT SPECIFICATION

(11) **EP 2 952 263 B1**
(45) Date of publication and mention of the grant of the patent: **06.06.2018**
(21) Application number: 15162459.0
(22) Date of filing: 02.04.2015
(51) Int. Cl.: B05B 7/14, B05C 19/04, B05C 19/06

(54) **METHOD AND APPARATUS FOR APPLYING PARTICULATE**
VERFAHREN UND VORRICHTUNG ZUM AUFTRAGEN EINES PARTIKELS
PROCÉDÉ ET APPAREIL D'APPLICATION DE MATIÈRES PARTICULAIRES

(30) Priority: 04.06.2014 US 201414295672
(43) Date of publication of application: 09.12.2015
(73) Proprietor: Standex International Corporation, Salem, NH 03079 (US)
(72) Inventor: Colclough, Howard E., Lynn Massachusetts, MA Massachusetts 01902 (US); Cucci, Alesandro, Wakefiield, Massachusetts, MA Massachusetts 01880 (US); Farley, Kenneth James, Arlington Massachusetts, MA Massachusetts 02474 (US); Francois, Evans, Newmarket, NH New Hampshire 03857 (US); Pronk, Casper, Boston, MA 02114 (US)
(74) Representative: Lippert Stachow Patentanwälte Rechtsanwälte

(56) References cited:
- EP-A1- 0 794 009
- WO-A1-2010/103453
- FR-A- 1 320 355
- US-A- 4 800 102
- US-A- 5 248 524
- US-A1- 2011 287 170

## Description

### FIELD OF THE INVENTION

The invention relates to a feeding apparatus fordelivering quantities of particulate material at a predetermined speed and position to specific locations on a substrate.

### BACKGROUND OF THE INVENTION

Absorbent articles, such as disposable diapers, incontinence pads and the like, may be formed by air-laying fibrous materials on a foraminous surface and depositing super-absorbent materials in particulate or powder form across or throughout the fibrous web. The super-absorbent materials may be directed to certain specific areas of the web where fluids may be concentrated to improve the efficiency of containing and absorbing such fluids. It may be desirable to closely control the application of the super-absorbent materials to localized areas of the web where they may encounter liquids due to their relatively higher cost.

Diapers and like absorbent pads may be manufactured at very high production rates, for instance, 200 to 2000 units per minute. In addition, specific patterns of desired absorbency may vary in shape and location depending on the size and intended use of the absorbent pad. It is desirable and an object of the present invention to provide a particulate metering assembly that has an improved ability to direct particles in a specific pattern to specific areas on the substrate.

Super-absorbent particles are generally comprising an outer shell and inner core. Performance of said materials can be negatively impacted due to excessive handling if the outer shell is compromised. Therefore, it is advantageous to provide a particulate metering assembly that uses all the material supplied to it and does not rely on recirculating a portion of unused material.

US 2011/287170 A1 discloses a feeding apparatus for delivering quantities of particulate material at a predetermined speed and position to specific locations on a substrate, comprising a valve and body assembly that collects a quantity of particulate material while in a closed position and deposits the entirety of the collected particulate material without relying on recirculating unused material, the valve and body assembly comprising a rotary gate valve (40) rotatable with a rotational velocity which comprises a rotating disc assembly and a top sealing plate, a feeder tube having a longitudinal axis which provides particulate material to the rotary gate valve, an eductor or venturi nozzle assembly that creates an airstream, the rotating disc assembly having at least one opening that when rotated in line with the longitudinal axis of the feeder tube allows collected particulate material to be drawn through the opening by the airstream created by the eductor or venturi nozzle assembly.

### SUMMARY OF THE INVENTION

The above-mentioned object is achieved by a feeding apparatus including the above-stated features disclosed by US 2011/287170 A1 which comprises a lip included in the top sealing plate which circumscribes the area below the feeder tube and a gap which is provided between the lip and the rotating disc assembly which is adjustable through a range of values from actual contact with the rotating disc assembly up to a multiple of the particulate material's mean diameter to provide a controlled amount of bypass from the collected particulate material.

In one exemplary embodiment, the present disclosure comprises a particulate feeding apparatus for applying powder, such as super-absorbent materials to a substrate, such as a fibrous web. The apparatus comprises a feeder tube for the powder and a rotary gate valve, including one or more holes, to intermittently feed powder to an eductor or venturi nozzle that creates an air stream. The rotary valve provides an intermittent supply of powder to a relatively low-pressure zone at the nozzle formed by the venturi action of the passing air stream and the powder may be distributed precisely where desired.

The feeding apparatus of the present invention may be used for delivering powder to a substrate in precise amounts and distribution patterns is provided wherein a rotary gate valve having one or more openings in a sealing face may be rotated at high speed to provide a supply of powder to a distribution nozzle. The nozzle may be located in a stream of venturi air. The venturi effect of relatively high-pressure air passing the end of the nozzle may draw the powder into the air stream for precise distribution to a substrate, such as a fibrous web.

The feeding apparatus of the present disclosure may operate to deliver powder in high speed manufacturing processes that may operate to produce diapers at a rate of about 1200 diapers per minute, utilizing valve actuations at increments of about 0.05 seconds.

### BRIEF DESCRIPTION OF THE DRAWINGS

The features, operation and advantages of the invention may be better understood from the following detailed description of the preferred embodiments taken in conjunction with the attached drawings, in which:
FIG. 1A is a cross-sectional view of the particulate feeding apparatus of the present disclosure;
FIG. 1B is an enlarged cross-sectional view of the valve and nozzle of the particulate feeding apparatus of the present disclosure;
FIG. 2 is an exploded view of the particulate feeding apparatus of FIG.1, illustrating the rotary gate valve;
FIG. 2A is a detailed cross-sectional view of the invention.

### DETAILED DESCRIPTION OF THE INVENTION

Diapers and other personal hygiene products having a capability of containing and absorbing liquids, such as body fluids, may be manufactured at very high production rates, for instance, 200-2000 units per minute, by laying a web of pulp fiber materials, such as cellulose, onto a conveyor or forming drum through which air may be drawn. As the understanding of the human anatomy has increased, it has become important to improve the absorbency of fluids in specific areas of the diaper, for instance, more in the front and back of the user as opposed to the crotch. In addition, cost and weight considerations demand that a minimum amount of absorbent material be used.

The use of super-absorbent materials or polymers, such as a polyacrylic acid sodium salt, may greatly increase the absorptive capacity of the fibrous web and may be placed strategically where most fluids may collect. Such super-absorbent materials are generally applied in particulate form to portions of the fibrous web by a spray gun or other feeding apparatus. The particulate form of material may include what is termed as a powder. Accordingly, reference to particulate herein may be understood as a material having a largest cross-sectional diameter of 2,54 mm (0.10") or less and of varying geometries (e.g., round, oval, etc.). In addition, such super-absorbent materials may include those materials that can absorb up to 500 times its weight in a fluid, such as water. It is worth noting that the super-absorbent polymers may include other resins. For example, such resins may include polyacrylamide polymers, ethylene-maleic anhydride copolymer, cross-linked carboxyl-methyl-cellulose poly (vinyl alcohol), cross-linked polyethylene oxide, and/or starch grafted copolymers of poly (acrylonitrile).

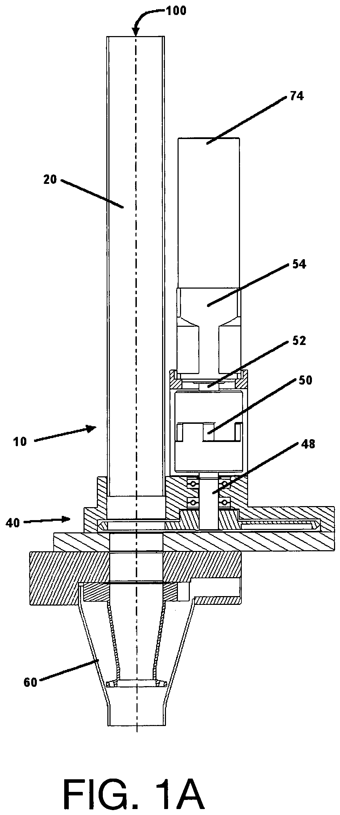

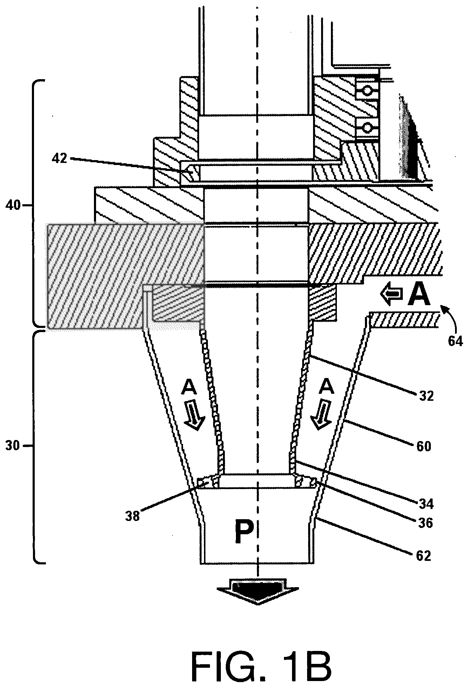

To minimize the amount of super-absorbent material used, it may be important to deliver precise quantities to specific areas of the web via a feeder apparatus. Feeding apparatus 10, according to the present disclosure, is illustrated in FIG.1A. The feeding apparatus may be positioned adjacent to a conveyor or forming drum onto which a fibrous web has been deposited and may direct an intermittent flow of super-absorbent material in powder or particulate form to specific areas and in specific patterns by moving the apparatus relative to the web and by the action of rotary gate valve 40 which may feed powder to venturi nozzle assembly 30 (See FIG.1B).

Feeding apparatus 10 further comprises feeder tube 20 that provides particulate material 100 to rotary gate valve 40. The particulate may be fed through tube 20 by gravimetric means, by an auger, by a loss-in-weight device, or other apparatus as is known in the art, which may provide a constant supply of particulate to rotary gate valve 40. In one exemplary embodiment, feeder tube 20 may be a 3,81 cm (1 ½ inch) diameter stainless steel tube about 30,48 cm (12 inches) long.

As shown in FIG. 1A, valve 40 comprises rotating disc assembly 42 driven by shaft 52 engaged to motor 54 through double-sealed radial bearing 48 and two LOVEJOY™ shaft couplings 50. The motor further includes gearbox 72 and motor controller 74.

At the output end of feeding apparatus 10, venturi nozzle assembly 30 is provided to direct the flow of particulate to a fibrous web. The venturi nozzle assembly 30 comprises inner nozzle 32 that may be aligned along a common longitudinal axis with feeder tube 20. Inner nozzle 32 may have a tapered shape in the form of venturi portion 34 as well as flared end portion 36 including a plurality of through-holes 38. Outer nozzle 60 may be located outside of and concentric with inner nozzle 32.

The venturi nozzles provide a restriction to the flow of air, A, as it passes between nozzles 32 and 60, that may cause an increase in velocity of the air and a drop in pressure, P.

Outer nozzle 60 may have a tapered shape in the form of venturi portion 62 that fits closely over flared end portion 36 of inner nozzle 32. One or more air inlets 64 may be provided at the inlet end of nozzle 32 to provide a supply of pressurized air to nozzle assembly 30.

The flow of a stream of air, A, through nozzle assembly 30 may cause an area of lower pressure, P, to be formed downstream of flared end portion 36 due to the venturi effect and when rotary gate valve 40 is open, collected particulate material 110 may be drawn by suction into air stream, A, and projected from nozzle assembly 30 towards a target substrate (not shown).

Plurality of holes 38 may be angled relative to the longitudinal axis of nozzle assembly 30 to provide a further reduction in pressure at the outlet of inner nozzle 32 and reduce the area of the projected cone of dispersed powder. Holes 38 having a diameter of about 0,127 mm (0.005 inches) to 6,35 mm (0.250 inches) with either straight or tapered cross-sections and at angles including 0° (or parallel with the longitudinal axis of the nozzle assembly) to 45° from the longitudinal axis of nozzle assembly 30, including all angles there between are contemplated.

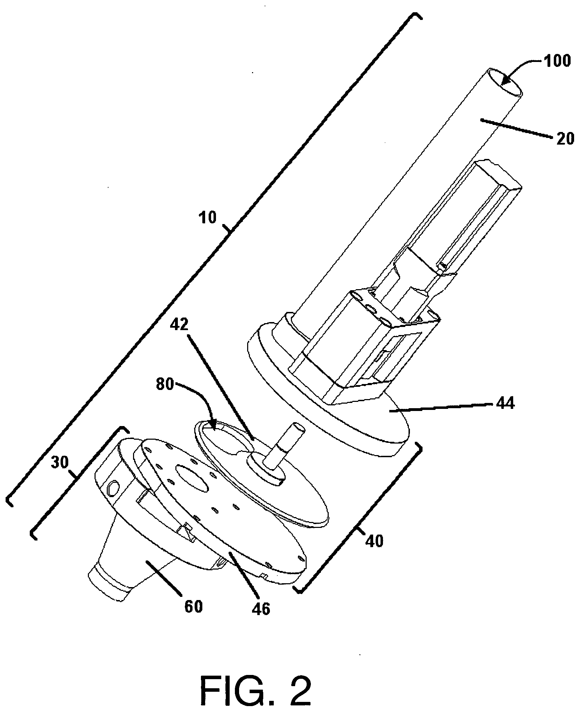

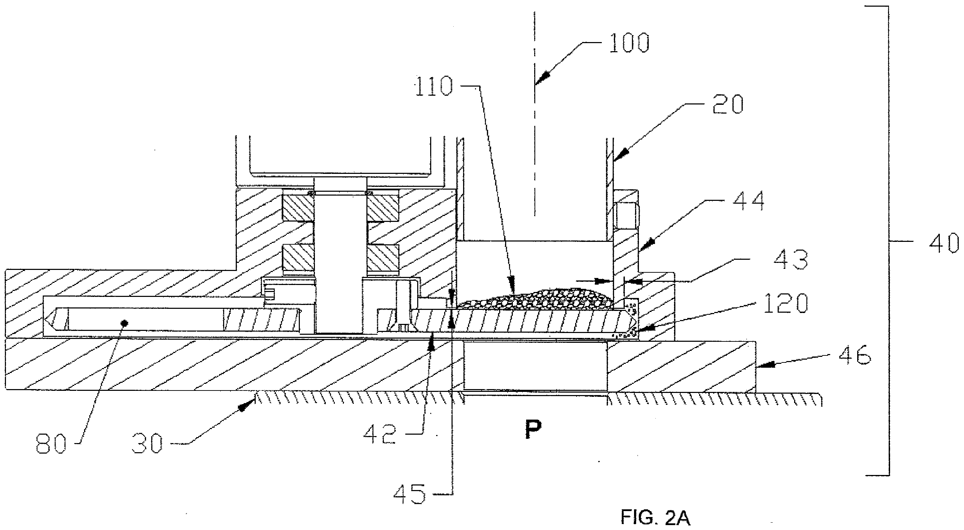

FIG. 2 is an exploded view of apparatus 10 of FIG. 1A illustrating more clearly rotary gate valve 40. Valve 40 comprises rotating disc assembly 42 and top sealing plate 44 and bottom sealing plate 46.

Now referring to FIG. 2A, top sealing plate 44 includes lip 43 either as an integral part of top sealing plate 44 or as a separate replaceable component. Lip 43 circumscribes the area below feed tube 20, either as a direct projection of feed tube 20 cross-section or as a transition from feed tube 20 cross-section into another desired geometry; for example, round, oval, rectangular, trapezoidal, cuneal, etc. Lip 43 further has a gap 45 between itself and a rotating disc assembly 42. Gap 45 may be adjusted through a range of values from zero clearance, that is, actual contact with disc assembly 42 up to some multiple of the particulate material's mean diameter.

For the purposes of this invention and the primary particulate material of interest, gap 45 of between 0,127 mm (0.005") to 0,762 mm (0.030") was found to be most desirable. While rotating disc assembly 42 is rotating through the closed portion of its cycle, disc assembly 42, top sealing plate 44 and feeder tube 20 may create a chamber wherein particulate material 100 may be collected particulate material 110. The aforementioned gap 45 can be utilized to provide a controlled amount of bypass 120 from collected particulate material 110. FIG. 2A illustrates tested results correlating the value of gap 45 with the percentage of bypass particulate material 120. One or more openings 80 may be formed in rotating disc assembly 42 that when rotated in line with feeding tube 20 allow collected particulate material 110 to be drawn through one or more openings into inner nozzle assembly 32 by low pressure, P, formed by air stream, A, being forced through venturi nozzle assembly 30.

By varying the speed at which rotating disc assembly 42 rotates, it is possible to vary the amount (duration) of powder or particulate 100 directed towards a target substrate such as a web. For instance, disc assembly 42 may be operated at about 1200 rpms with air supplied at about 6,2 · 10⁵ Pa (90 psi) to deliver particulate at a rate of about 5-25 g/diaper to a conveying mechanism producing about 1200 diapers per minute. Thus, valve 40 may operate to open and close in increments as small as, for instance, 0.05 seconds, or in the range of 0.03-0.30 seconds, including all values and increments therein. It may therefore be appreciated that one may operate the apparatus herein where the disc may rotate at 200-2000 rpms and the air supplied may be pressures of 6,89 · 10⁴ Pa- 1,38 · 10⁵ Pa (10-200 psi), including all values and increments therein. The instantaneous rotational speed of disc assembly 42 may be controlled during a single revolution, or some part thereof, to alter the open and closed time of valve 40 thereby altering position, timing, and spread of the deposited material.

The mean rotational speed of disc assembly 42 may be matched to the substrate speed in order to facilitate proper depositing of the particulate material. Examples of methods and devices that can be used to determine and match the substrate speed are rotational encoders, tachometers (optical and mechanical), position sensors such as *Hall Effect* and proximity, etc.

The position of the substrate and position of valve 40 may be monitored such that the open position of valve 40 may be adjusted to facilitate proper depositing of the particulate material. Examples of methods and devices that can be used to determine and match the substrate location are noted above.

The operator, through the use of motor control system 74, may adjust instantaneous rotational speed and position of disc assembly 42 with relation to the substrate speed and location thereby modifying depositing of the particulate material.

An automated inspection system such as optical, impedance, etc., may be incorporated to determine the actual location of the deposited particulate material 110 on the substrate. Information from this system may be fed to motor control system 74 to adjust instantaneous rotational speed and position of disc assembly 42 with relation to the substrate speed and location thereby correcting depositing of the particulate material.

Tables, equations, or sets of equations may be stored and utilized by the motor control system 74 to properly calculate instantaneous speed and acceleration and position of disc assembly 42 to account for varying speeds and accelerations of the substrate material.

The size, shape and number of openings may be varied to provide different patterns of coverage of particulate material powder 100 onto a given substrate location. For example, one may provide a generally round pattern, an oval pattern, etc. in one exemplary embodiment opening 80 may be shaped with respect to its cross-sectional area such that the leading edge of the opening may have a lesser or greater cross-sectional area than the trailing edge of the opening (e.g. tapered) such that the distribution of the particulate stream is varied. Purely by way of an example, a method is described to localize the application of a powder or particulate material 100 on a substrate by providing a substrate, such as a fibrous web, providing a particulate, such as a super-absorbent material, to be applied precisely to localized areas of the web. The method includes providing a feeding apparatus 10 noted above, which again includes a feeder tube 20, a driven rotary gate valve 40 and a venturi nozzle assembly 30 to direct the powder onto the web. The venturi nozzle assembly includes inner 32 and outer 60 venturi nozzles which when fed with a supply of pressurized air, A, creates an area of relatively low pressure, P, at the outlet or downstream side of rotary gate valve 40. Upon rotation of disc assembly 42 of gate valve 40, one or more openings 80 in disc assembly 42 may align with feeding tube 20 and inner venturi nozzle 32 to allow collected particulate material 110 to be extracted from feeding tube 20 and mixed with air stream, A, that may be directed at the substrate.

Accordingly, the present disclosure provides a relatively high speed and pulsed or intermittent supply of particulate material at selected locations on a substrate, such as a non-woven substrate, which may be used in, e.g., a diaper application. The ability to manufacture and target absorbent particulate, at a selected location, with a selected pattern, and at the speeds noted herein, may therefore provide a relatively more efficient manufacturing operation that may be essential for the formation of products that require a relatively high volume of production.

While particular embodiments of the present invention have been disclosed, it should be clear to those skilled in the art that various changes and modifications can be made without departing from the scope of the appended claims.

## Claims

1. A feeding apparatus (10) for delivering quantities of particulate material (100) at a predetermined speed and position to specific locations on a substrate, comprising:
a valve and body assembly that collects a quantity of particulate material (100) while in a closed position and deposits the entirety of the collected particulate material (110) without relying on recirculating unused material;
the valve and body assembly comprising a rotary gate valve (40) rotatable with a rotational velocity which comprises a rotating disc assembly (42) and a top sealing plate (44);
a feeder tube (20) having a longitudinal axis which provides particulate material (100) to the rotary gate valve (40);
an eductor or venturi nozzle assembly (30) that creates an airstream;
the rotating disc assembly (42) having at least one opening (80) that when rotated in line with the longitudinal axis of the feeder tube (20) allows collected particulate material (110) to be drawn through the opening (80) by the airstream created by the eductor or venturi nozzle assembly (30);
**characterized by**
a lip (43) included in the top sealing plate (44) which circumscribes the area below the feeder tube (20); and
a gap (45) which is provided between the lip (43) and the rotating disc assembly (42) which is adjustable through a range of values from actual contact with the rotating disc assembly (42) up to a multiple of the particulate material's mean diameter to provide a controlled amount of bypass (120) from the collected particulate material (110).

2. The feeding apparatus of Claim 1, wherein the venturi nozzle assembly (30) comprises:
a tapered inner nozzle (32) aligned with the longitudinal axis of the feeder tube (20), the inner nozzle (32) having a venturi portion (34) with a flared end portion (36); and
a tapered outer nozzle (60) positioned outside of the inner nozzle (32) and concentric with the inner nozzle (32), the outer nozzle (6) also having a venturi portion (62) that is positioned over the flared end portion (36) of the inner nozzle (32), such that a flow of air through the outer nozzle (60) produces an increase in velocity of the air and a corresponding drop in pressure (P) downstream of the flared end portion (36) of the inner nozzle (32), such that particulate material provided by the rotating gate valve (40) is sucked into the airstream and deposited on the substrate.

3. The feeding apparatus of Claim 1 or Claim 2, wherein the lip (43) is an integral part of the top sealing plate (44).

4. The feeding apparatus of one of Claims 1 to 3, wherein the lip (43) is shaped as a transition from the cross-sectional shape of the feeder tube (20) into different geometry.

5. The feeding apparatus of one of Claims 1 to 4, wherein said gap (45) ranges in size from 0,127 mm (0.005 inches) to 0,762 mm (0.030 inches).

6. The feeding apparatus of one of Claims 1 to 5, wherein the time period during which the rotary gate valve (40) opens and closes ranges from 0,035 seconds to 0,30 seconds.

7. The feeding apparatus of one of Claims 1 to 6 further comprising a motor control system (74) for controlling the instantaneous rotational speed and position of the rotating disc assembly (42) in relation to the substrate speed and location thereby modifying the deposition of particulate material on the substrate.

8. The feeding apparatus of Claim 2, wherein the flared end portion (36) of the inner nozzle (32) comprises a plurality of through-holes (38) angled relative to the longitudinal axis of the venturi nozzle assembly (30) for the purpose of increasing the venturi effect of said venturi nozzle assembly (30).

9. The feeding apparatus of Claim 8, wherein the through-holes (38) in the inner nozzle (32) range in diameter from 0,127 mm (0.005 inches) to 6,35 mm (0.250 inches).

10. The feeding apparatus of one of Claim 2, wherein the air supplied to the outer nozzle (60) ranges in pressure from 6,89 · 10⁴ Pa (10 psi) to 1,38 · 10⁵ Pa (200 psi).

11. The feeding apparatus of one of Claims 1 to 10, wherein the feeder tube (20) is gravity fed with free-floating particulate material under ambient atmospheric conditions.

## Patentansprüche

1. Zuführvorrichtung (10) zum Abgeben von Mengen an Partikelmaterial (100) mit vorgegebener Geschwindigkeit und Position an bestimmten Stellen auf einem Substrat, umfassend:
eine Ventil- und Korpus-Baugruppe, die eine Menge an Partikelmaterial (100) ansammelt, während sie sich in einer geschlossenen Position befindet, und das gesamte angesammelte Partikelmaterial (110) ablagert, ohne darauf zurückzugreifen, ungenutztes Material wieder in Umlauf zu bringen,
wobei die Ventil- und Korpus-Baugruppe ein mit einer Drehgeschwindigkeit drehbares Drehschieberventil (40) umfasst, das eine Drehscheibenanordnung (42) und eine obere Abdichtplatte (44) umfasst,
ein Zuführrohr (20) mit einer Längsachse, das Partikelmaterial (100) für das Drehschieberventil (40) bereitstellt,
eine Injektor- oder Venturi-Düsenanordnung (30), die einen Luftstrom erzeugt,
wobei die Drehscheibenanordnung (42) mindestens eine Öffnung (80) aufweist, die, wenn sie in Ausrichtung zu der Längsachse des Zuführrohrs (20) gedreht ist, ermöglicht, dass angesammeltes Partikelmaterial (110) durch den von der Injektor- oder Venturi-Düsenanordnung (30) erzeugten Luftstrom durch die Öffnung (80) gezogen wird,
**gekennzeichnet durch**
eine Lippe (43), die in der oberen Abdichtplatte (44) integriert ist und die den Bereich unterhalb des Zuführrohrs (20) umgibt, und
einen zwischen der Lippe (43) und der Drehscheibenanordnung (42) vorgesehenen Spalt (45), der über einen Bereich von Werten einstellbar ist, vom tatsächlichen Kontakt mit der Drehscheibenanordnung (42) bis zu einem Vielfachen des Mittelwerts des Durchmessers des Partikelmaterials, um eine kontrollierte Durchlassmenge (120) des angesammelten Partikelmaterials (110) bereitzustellen.

2. Zuführvorrichtung nach Anspruch 1, wobei die Venturi-Düsenanordnung (30) umfasst:
eine konische innere Düse (32), die mit der Längsachse des Zuführrohrs (20) ausgerichtet ist, wobei die innere Düse (32) einen Venturi-Abschnitt (34) mit einem aufgeweiteten Endabschnitt (36) aufweist, und
eine konische äußere Düse (60), die außerhalb der inneren Düse (32) und konzentrisch zu der inneren Düse (32) angeordnet ist, wobei die äußere Düse (6) ebenfalls einen Venturi-Abschnitt (62) aufweist, der über dem aufgeweiteten Endabschnitt (36) der inneren Düse (32) angeordnet ist, so dass eine Luftströmung durch die äußere Düse (60) einen Geschwindigkeitsanstieg der Luft und einen entsprechenden Druckabfall (P) hinter dem aufgeweiteten Endabschnitt (36) der inneren Düse (32) erzeugt, so dass das von dem Drehschieberventil (40) bereitgestellte Partikelmaterial in den Luftstrom eingesaugt und auf dem Substrat abgelagert wird.

3. Zuführvorrichtung nach Anspruch 1 oder Anspruch 2, wobei die Lippe (43) integraler Teil der oberen Abdichtplatte (44) ist.

4. Zuführvorrichtung nach einem der Ansprüche 1 bis 3, wobei die Lippe (43) als Übergang von der Querschnittsform des Zuführrohrs (20) zu einer anderen Geometrie geformt ist.

5. Zuführvorrichtung nach einem der Ansprüche 1 bis 4, wobei der Spalt (45) eine Größe im Bereich von 0,127 mm (0,005 Zoll) bis 0,762 mm (0,030 Zoll) aufweist.

6. Zuführvorrichtung nach einem der Ansprüche 1 bis 5, wobei die Zeitspanne, während der sich das Drehschieberventil (40) öffnet und schließt, im Bereich von 0,035 Sekunden bis 0,30 Sekunden liegt.

7. Zuführvorrichtung nach einem der Ansprüche 1 bis 6, ferner mit einem Motorsteuersystem (74) zum Steuern der momentanen Drehgeschwindigkeit und Position der Drehscheibenanordnung (42) in Bezug auf die Geschwindigkeit und Lage des Substrats, wodurch die Ablagerung von Partikelmaterial auf dem Substrat modifiziert wird.

8. Zuführvorrichtung nach Anspruch 2, wobei der aufgeweitete Endabschnitt (36) der inneren Düse (32) eine Mehrzahl von Durchgangslöchern (38) aufweist, die in Bezug auf die Längsachse der Venturi-Düsenanordnung (30) schräg ausgebildet sind, um den Venturi-Effekt der Venturi-Düsenanordnung (30) zu erhöhen.

9. Zuführvorrichtung nach Anspruch 8, wobei die Durchgangslöcher (38) in der inneren Düse (32) einen Durchmesser im Bereich von 0,127 mm (0,005 Zoll) bis 6,35 mm (0,250 Zoll) aufweisen.

10. Zuführvorrichtung nach Anspruch 2, wobei die der äußeren Düse (60) zugeführte Luft einen Druck im Bereich von 6,89·10⁴ Pa (10 psi) bis 1,38·10⁵ Pa (200 psi) aufweist.

11. Zuführvorrichtung nach einem der Ansprüche 1 bis 10, wobei das Zuführrohr (20) mit freischwebendem Partikelmaterial unter atmosphärischen Umgebungsbedingungen unter Ausnutzung der Schwerkraft gespeist wird.

## Revendications

1. Appareil d'alimentation (10) pour délivrer des quantités de matière particulaire (100) à des emplacements spécifiques sur un substrat à une vitesse et position prédéterminée, comprenant:
un ensemble soupape et corps qui recueille une quantité de matière particulaire (100) en position fermée et dépose la totalité de la matière particulaire recueillie (110) sans reposer sur la recirculation de matière non-utilisée;
l'ensemble soupape et corps comprenant une soupape de distribution rotative (40) pouvant tourner à une vitesse de rotation et comprenant un ensemble disque tournant (42) et une plaque d'étanchéité supérieure (44);
un tube d'alimentation (20) avec un axe longitudinal fournissant de matière particulaire (100) à la soupape de distribution rotative (40);
un ensemble éducteur ou buse venturi (30) qui crée un courant d'air;
l'ensemble disque tournante (42) comportant au moins un orifice (80) qui, lors de la rotation en accord avec l'axe longitudinal du tube d'alimentation (20), permet la matière particulaire recueillie (110) d'être aspirée à travers l'orifice (80) par le courant d'air créé par l'ensemble éducteur ou buse venturi (30);
**caractérisé par**
une lèvre (43) incluse dans la plaque d'étanchéité supérieure (44) entourant la région au-dessous du tube d'alimentation (20); et
un écart (45) prévu entre la lèvre (43) et l'ensemble disque tournante (42) réglable dans une plage de valeurs à partir d'un contact réel avec l'ensemble disque tournante (42) jusqu'un multiple de diamètre moyen de la matière particulaire, pour fournir une quantité contrôlée de dérivation (120) partant depuis la matière particulaire recueillie (110).

2. Appareil d'alimentation selon la revendication 1, dans lequel l'ensemble buse venturi (30) comporte:
une buse intérieure conique (32) alignée avec l'axe longitudinal du tube d'alimentation (20), ladite buse intérieure (32) comprenant une partie venturi (34) avec une partie terminale évasée (36); et
une buse extérieure conique (60) positionnée à l'extérieur de la buse intérieure (32) et de manière concentrique avec la buse intérieure (30), la buse extérieure (60) également comprenant une partie venturi (62) positionnée au-dessus de la partie terminale évasée (36) de la buse intérieure de sorte que un courant d'air à travers la buse extérieure (60) produit une augmentation de la vitesse de l'air et une baisse correspondante de la pression (P) en aval de la partie terminale évasée (36) de la buse intérieure (32) de telle manière que la matière particulaire fournie par la soupape de distribution rotative (40) est aspirée dans la courant d'air et déposée sur le substrat.

3. Appareil d'alimentation selon la revendication 1 ou la revendication 2, dans lequel la lèvre (43) fait partie intégrante de la plaque d'étanchéité supérieure (44).

4. Appareil d'alimentation selon l'une des revendications 1 à 3, dans lequel la lèvre se présente sous la forme d'une transition de la forme de section transversale du tube d'alimentation (20) dans des géométries différentes.

5. Appareil d'alimentation selon l'une des revendications 1 à 4, dans lequel la dimension de l'écart (45) va de 0,127 mm (0.005 inches) à 0,762 mm (0.030 inches).

6. Appareil d'alimentation selon l'une des revendications 1 à 5, dans lequel la période de temps pendant laquelle la soupape de distribution rotative (40) s'ouvre et se ferme va de 0,035 secondes à 0,30 secondes.

7. Appareil d'alimentation selon l'une des revendications 1 à 6, comprenant en outre un système de commande de moteur (74) pour commander la vitesse instantanée de rotation et la position de l'ensemble disque rotative (42) par rapport à la vitesse et l'emplacement du substrat, modifiant ainsi la déposition de la matière particulaire sur le substrat.

8. Appareil d'alimentation selon la revendication 2, dans lequel la partie terminale évasée (36) de la buse intérieure (42) comprend une pluralité de trous traversants (38) inclinés par rapport à l'axe longitudinal de l'ensemble buse venturi (30), aux fins d'augmenter l'effet venturi dudit ensemble buse venturi (30).

9. Appareil d'alimentation selon la revendication 8, dans lequel les trous traversants (38) dans la buse intérieure (32) présentent un diamètre dans une plage de 0,127 mm (0.005 inches) à 6,35 mm (0.250 inches).

10. Appareil d'alimentation selon la revendication 2, dans lequel l'air fourni à la buse extérieure (60) a une pression dans une plage de 6,89 · 10⁴ Pa (10 psi) à 1,38 · 10³ Pa (200 psi).

11. Appareil d'alimentation selon l'une des revendications 1 à 10, dans lequel le tube d'alimentation (20) est alimenté en matière particulaire flottant librement par gravité et dans des conditions ambiantes atmosphériques.
